# EUROPEAN PATENT APPLICATION

(11) **EP 2 374 605 A1**
(43) Date of publication of application: **12.10.2011**
(21) Application number: 11250447.7
(22) Date of filing: 08.04.2011
(51) Int. Cl.: B29C 70/44, B29C 70/54

(54) **Composite moulding methods**

(30) Priority: 10.04.2010 GB 1006011
(71) Applicant: GSSC, Inc., Clearwater, FL 33760 (US)
(72) Inventor: Tur, Charles, 43430 Les Vastres (FR)
(74) Representative: Brown, Michael Stanley

(57) **Abstract**

A method of producing a composite moulding includes placing an elastomeric resin flow channel (1) on a mould surface (6) with a membrane (5) extending over the resin flow channel (1) and the mould, the resin flow channel (1) having a fibrous layer (2) on the surface thereof covered by the membrane (5), and in which vacuum is applied to the space within the membrane (5) to draw the membrane (5) into sealing engagement with the mould.

## Description

### Field of the Invention

This invention relates to methods of producing composite mouldings.

The moulding of composites is carried out by many different processes, amongst which is the vacuum infusion process, with which the present invention is primarily concerned.

In the vacuum infusion process, a rigid mould having a smooth border flange (normally disposed horizontally) is laid up with dry fibre reinforcement, i.e. a reinforcement pack, within the borders. The dry reinforcement fibre may be in mat form, a woven cloth or a multi-axial cloth or a combination of any as a reinforcement pack. The reinforcement pack is positioned so that it does not encroach upon the border so that a counter membrane mould of similar size and shape can be laid over the reinforcement pack and made to seal around the peripheral fibre-free border so that a vacuum can be applied to the underside of the membrane whereby the membrane is forced down upon the reinforcement pack by the outside atmospheric air pressure.

Once the rigid mould, the reinforcement pack and the membrane are vacuum-tight as described above, a resin mixture is infused through strategically placed vacuum-secure pipe connections in the membrane into the reinforcement pack in order to flow into and fill all the dry reinforcement under the membrane.

Reusable membranes designed for the infusion process are normally formed from an elastomeric mouldable material or sheets of various different materials. For example, catalyst-cured or platinum-cured silicones may be used. These are either sprayed or brush-applied and allowed to cure onto a matching mould surface. Also, pre-made silicone sheets may be used, which are tailored to fit the mould size and shape and are joined together with appropriate adhesive systems or vulcanising methods. Other systems use polyurethane polymers in liquid form which are brushed or sprayed onto a matching mould and allowed to cure before being removed and used as a reusable infusion membrane.

Various methods are used to aid the distribution of resin under the film membrane. For example, spiral-wrap plastic strips or elastomeric profiles in strip form may be used to provide an easy path for the resin over a specific length and to provide a feeding face which allows the resin to feed to the top face of the reinforcement pack. These strips or profiles can be considered as forming resin feeding channels.

It is an object of the present invention to provide an improved method of producing composite mouldings.

It is also an object of the present invention to provide an improved vacuum infusion moulding process.

### Summary of the Invention

According to a first aspect of the present invention there is provided a method of producing a composite moulding in which an elastomeric resin flow channel is placed on a mould surface with a membrane extending over the resin flow channel and the mould, the resin flow channel having a fibrous layer on the surface thereof covered by the membrane, and in which vacuum is applied to the space within the membrane to draw the membrane into sealing engagement with the mould.

After the membrane has been drawn into sealing engagement with the mould, the resin is fed along the channel into the mould.

According to a second aspect of the present invention there is provided a vacuum infusion moulding process which includes the use of an elastomeric resin flow channel having a fibrous layer on its presented surface, which surface is covered by a membrane.

The membrane and resin flow channel are preferably reusable to provide significant cost savings.

### Brief Description of the Drawings

Figure 1 shows an elastomeric resin flow channel and a membrane prior to attachment thereof together,
Figure 2 shows the resin flow channel bonded to the membrane, and
Figure 3 shows the resin flow channel and the membrane on top of a mould prior to a moulding operation.

### Description of the Preferred Embodiment

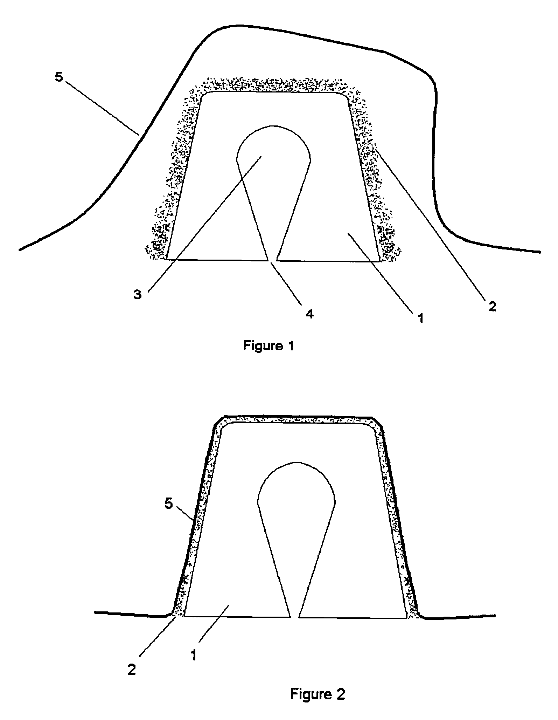

Figure 1 shows an elastomeric resin flow channel element 1, which has been formed by an extrusion process and the cross-section of which is characterised by a large flow shape 3 (for the flow of resin during a moulding operation) and a smaller outlet shape 4. The top and two sides of the resin flow channel element 1 have a dry "fluffy" material 2 bonded to the extrusion by a proprietary industrial method so as to form a fibrous layer over the presented surface of the resin flow channel 1. The "fluffy" bonded material can be a non-woven man-made fibrous layer but, whatever material is used, it is designed to provide a bondable surface for releasably bonding a reusable membrane 5 to the top and side surfaces of the resin flow channel 1.

The resin flow channel element 1 and the membrane 5 are assembled together to form a reusable composite membrane as shown in section in Figure 2. Thus the membrane 5 can now be considered as forming part of and being bonded to the resin flow channel element 1 by the characteristic fluffy surface 2, which provides a mechanical bonding surface between the two components. Alternatively, the resin flow channel element 1 can be considered as forming part of the membrane 5.

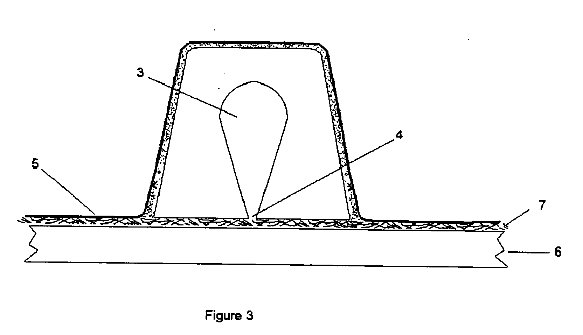

Figure 3 illustrates the reusable membrane 5 in use with the resin flow channel element 1 bonded to it. The membrane 5 is placed upon a mould face 6 upon which rests a reinforcement fibre pack 7. In production of a composite moulding, a vacuum is first produced between the membrane 5 and the mould surface 6 so that the reinforcement fibre pack 7 is held in compression in contact with the presented surface 6 of the mould. Resin is introduced through a suitable point in the resin flow channel element 1 and proceeds to flow for the full length thereof through the channel larger bore 3 and exits into the fibre pack 7 through the smaller outlet shape 4.

It will be appreciated that, once the resin cures and becomes hardened, the reusable membrane 5 can be removed from the cured laminate and, because of the flexible nature of the resin flow channel element 1 and its releasable bonding to the membrane 5, the resin flow channel element 1 can also be removed from the cured laminate. Any resin which remained in the flow channel interior shapes 3 and 4 can also be removed.

It is to be noted that, during this removal operation, the resin flow channel element 1 and the reusable membrane 5 will remain as one due to the bonding system described above.

## Claims

1. A method of producing a composite moulding in which an elastomeric resin flow channel is placed on a mould surface with a membrane extending over the resin flow channel and the mould, the resin flow channel having a fibrous layer on the surface thereof covered by the membrane, and in which vacuum is applied to the space within the membrane to draw the membrane into sealing engagement with the mould.

2. A method as claimed in Claim 1, in which the resin flow channel and the membrane are reusable.

3. A vacuum infusion moulding process which includes the use of an elastomeric resin flow channel having a fibrous layer on its presented surface, which surface is covered by a membrane.

4. A vacuum infusion moulding process as claimed in Claim 3, in which the membrane and resin flow channel are reusable.
